# FASCICULE DE BREVET EUROPEEN

(11) **EP 2 943 083 B1**
(45) Date de publication et mention de la délivrance du brevet: **23.11.2016**
(21) Numéro de dépôt: 14706869.6
(22) Date de dépôt: 09.01.2014
(51) Int. Cl.: A23L 5/00, A23L 13/00

(54) **PASTILLE DE SAUCE, PIÈCE DE VIANDE COMPRENANT UNE PASTILLE DE SAUCE ET APPAREIL DE MISE EN OEUVRE D'UNE PRÉPARATION BOUCHÈRE**
SAUCENPILLE, FLEISCHSTÜCK MIT EINER SAUCENPILLE UND EINRICHTUNG ZUR VORBEREITUNG EINER FLEISCHZUBEREITUNG
SAUCE PELLET, PELLET COMRISED IN A PIECE OF MEAT AND APPARATUS FOR THE PREPARATION OF A MEAT COMPOSITION.

(30) Priorité: 09.01.2013 FR 1300026
(43) Date de publication de la demande: 18.11.2015
(73) Titulaire: La Cheville Des Savoies, 73100 Aix les Bains (FR)
(72) Inventeur: ARNOULT, Mickael, FR-73170 Jongieux (FR); BARRAJA, Franck, FR-73100 Aix les Bains (FR); MATTEI, Nicolas, FR-73100 Aix les Bains (FR)
(74) Mandataire: Talbot, Alexandre
(86) Numéro de dépôt international: PCT/FR2014/000005
(87) Numéro de publication internationale: WO 2014/108625

(56) Documents cités:
- WO-A1-2008/086918
- BE-A1- 905 797
- US-A1- 2007 134 397
- US-A1- 2009 148 572

## Description

### Domaine technique de l'invention

L'invention concerne une pastille de sauce, une pièce de viande comprenant ladite pastille et un dispositif pour fabriquer ladite pièce de viande.

### État de la technique

Le domaine de l'alimentation et en particulier celui du steak haché, qui est l'un des produits les plus ancrés dans le quotidien des consommateurs, est en constante évolution. La modification du mode de vie et les exigences de plus en plus poussées du consommateur incitent les professionnels de l'alimentation à proposer des produits toujours plus rapides et pratiques à préparer et présentant un excellent rapport qualité/prix. Cependant, ces évolutions ont longtemps été faites au détriment de la qualité et du goût.

Afin d'améliorer ou de modifier le goût de leurs produits, notamment de leurs produits carnés, les industriels se sont tournés vers des sauces prêtes à l'emploi à ajouter, chaudes ou froides, aux produits cuits prêts à consommer. De telles sauces sont cependant à acheter et, éventuellement à préparer, séparément du produit carné et rares sont celles de qualité.

Actuellement, le consommateur privilégie de plus en plus la qualité et le goût plutôt que la quantité et le faible coût économique. Les produits bio, ceux à base de races à viande ou encore ceux présentant d'excellentes qualités gustatives sont privilégiés. Outre la qualité de la viande, les consommateurs recherchent également des assaisonnements présentant de bonnes propriétés nutritionnelles et gustatives.

### Objet de l'invention

On constate qu'il existe un besoin de développer un produit présentant à la fois les propriétés d'être simple et rapide à préparer tout en ayant une excellente valeur nutritionnelle et un goût de qualité.

On tend à résoudre ce besoin au moyen d'une pastille de sauce et une pièce de viande comprenant ladite pastille présentant un bon rapport « qualité-temps » pour les gastronomes ayant peu de temps à consacrer à la préparation des repas.

Ce but est en particulier atteint grâce à une pastille de sauce comprenant 4 à 10% en poids de protéines dont 2 à 5% en poids de gélatine, 1 à 3% en poids de fibres, moins de 10% en poids de lipides et présentant un point de fusion compris entre 23 et 35°C, préférentiellement entre 27 et 35°C.

Plus précisément, on tend à atteindre cet objectif au moyen d'une pièce de viande comprenant ladite pastille et dont:
- le centre de la pastille correspond substantiellement au centre de la pièce de viande,
- le rapport entre l'épaisseur de la pastille et l'épaisseur de la pièce de viande est compris entre 30 et 38%,
- le rapport entre le diamètre de la pastille et le diamètre de la pièce de viande est compris entre 58 et 65%,
- le rapport entre le volume de la pastille et le volume de la pièce de viande est compris entre 13 et 18%.

Enfin, l'invention est également relative à un dispositif pour fabriquer une pièce de viande telle que décrite ci-avant en coopération avec un tour de conditionnement, ledit dispositif comprenant :
- un premier motif d'un diamètre compris entre 4 et 6 cm et d'une épaisseur comprise entre 0,8 et 1,4 cm,
- un troisième motif ayant une première face munie d'un diamètre égal au diamètre du premier motif, une deuxième face munie d'un diamètre compris entre 7 et 9 cm et d'une épaisseur comprise entre 0,8 et 1,2 cm,
- un deuxième motif présentant un diamètre supérieur au diamètre du tour de conditionnement pour bloquer l'enfoncement du dispositif dans le tour de conditionnement.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une coupe transversale d'un mode de réalisation de la pastille de sauce dans une pièce de viande ;
- la figure 2 représente un mode de réalisation du dispositif pour fabriquer une pièce de viande contenant une pastille de sauce.

### Description de modes particuliers de réalisation

Afin d'obtenir le meilleur rapport « qualité-temps » possible, la sauce se présente sous forme d'une pastille. On entend par « pastille », une composition pastillée ou moulée d'une forme quelconque mais définie. Préférentiellement, la pastille se présente sous forme d'un cylindre dont la hauteur est inférieure au diamètre, il s'agit donc avantageusement d'une forme ronde et aplatie de type palet. La pastille peut avoir des arêtes vives ou des bords arrondis.

La pastille est solide à température ambiante, notamment à une température inférieure à 23°C. Elle présente un point de fusion (ou température de fusion) compris entre 23 et 35°C, préférentiellement entre 27 et 35°C. Le point de fusion est évalué à une pression atmosphérique normale, c'est-à-dire une pression de 1 atmosphère.

Grâce à son point de fusion particulier, la pastille peut être placée dans une pièce de viande sans aucune modification de sa forme durant toute la phase de stockage et d'utilisation préalable à la phase de fusion. Un tel conditionnement permet une bonne conservation de l'ensemble pastille / pièce de viande jusqu'à consommation. Lors de la cuisson de la pièce de viande, la température à coeur varie suivant le consommateur qui peut souhaiter sa viande saignante (température de cuisson atteinte à coeur comprise entre 25 et 55°C), cuite à point (température de cuisson atteinte à coeur comprise entre 55 et 65°C) ou bien cuite (température de cuisson atteinte à coeur supérieure à 65°C). Il a été découvert que lors de la cuisson, l'utilisation d'une pastille ayant une température de fusion supérieure à la gamme décrite rend difficile la diffusion de la sauce à l'intérieur de la pièce de viande sans risquer de détériorer les qualités gustatives de la pièce de viande. Une température de fusion inférieure à la gamme décrite se traduit par une diffusion importante de la sauce qui a tendance à sortir de la pièce de viande. Un tel point de fusion permet également à l'utilisateur de consommer une sauce ayant la texture habituelle, c'est-à-dire que la sauce ne se présente pas sous la forme d'un produit solide voire gélatineux ni sous la forme d'un produit très liquide qui coule dans le fond de l'assiette dès l'ouverture de la pièce de viande.

Le point de fusion de la pastille est tel que, lors d'une cuisson d'une durée de 5 à 15 minutes aux températures décrites ci-avant, la sauce fond dans la pièce de viande tout en restant confinée dans ladite pièce.

La pastille de sauce comprend 4 à 10% en poids de protéines dont 2 à 5% en poids de gélatine, 1 à 3% en poids de fibres et moins de 10% en poids de lipides. Cette composition permet d'avoir la transformation désirée de la texture de la pastille de sauce lors de la phase de cuisson d'où il en résulte une diffusion maitrisée de la sauce.

Avantageusement, la pastille comprend en outre 70 à 85% en poids d'eau. La pastille de sauce présente ainsi une bonne valeur nutritive et respecte des proportions adaptées à un régime alimentaire équilibré. Avantageusement, la pastille présente une valeur énergétique comprise entre 55 et 120 kcal pour 100 g de sauce.

Selon un mode de réalisation préféré, la pastille comprend moins de 4% d'acides gras saturés. Un tel mode de réalisation est particulièrement intéressant pour les consommateurs soucieux de leur équilibre l'alimentaire, plus particulièrement pour ceux surveillant leur cholestérolémie.

Avantageusement, la pastille comprend en outre 4 à 6% de protéines et/ou 2 à 4% de cendres.

Les glucides, lipides, protéines et autres constituants de la pastille peuvent être apportés sous forme de produits variés tels que de la gélatine, de l'huile, de la farine, de la crème, du fond de veau ou du bouillon de poule, de l'eau, du lait, des champignons, des échalotes, des oignons, des tomates sous forme de jus ou de concentré, du poivre noir ou vert, etc. Selon un mode particulièrement préféré, seuls des constituants traditionnels dans la cuisine française sont utilisés. La pastille de sauce peut ainsi être déclinée selon différentes saveurs, à titre d'exemple la sauce peut présentée une saveur « échalote », « poivre vert », « tomate » ou « champignon ».

Selon un mode de réalisation particulier, la pastille présente une forme cylindrique dont le rapport diamètre / hauteur est compris entre 4 et 6, préférentiellement compris entre 4,8 et 5,2. Une pastille de sauce selon un tel mode de réalisation présente l'avantage de pouvoir fondre entièrement lorsqu'elle est chauffée à une température minimum de 23°C durant 5 à 15 minutes. Cette forme de pastille est particulièrement avantageuse lors d'une cuisson traditionnelle, par exemple lors d'une cuisson dans une poêle.

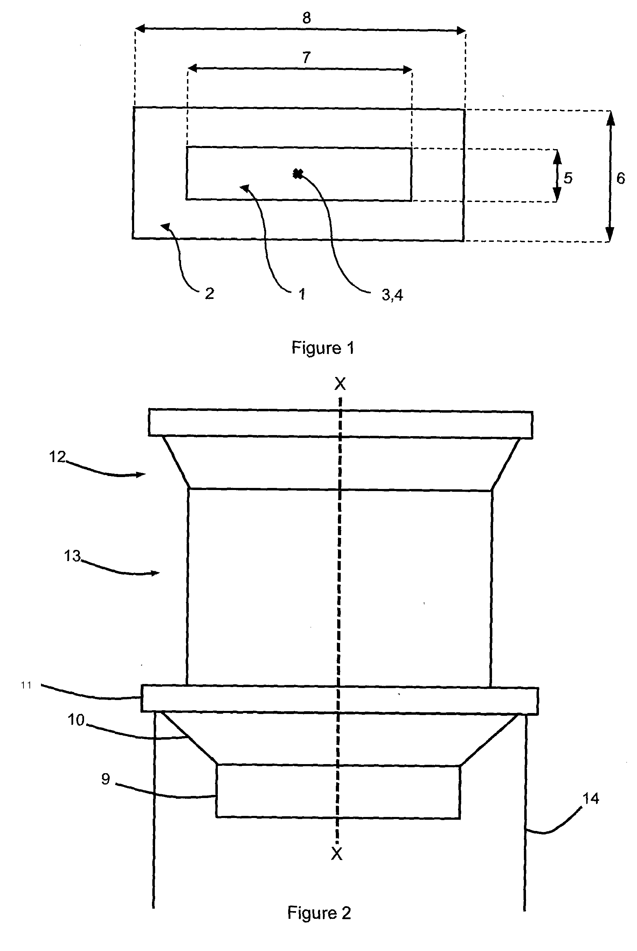

Comme illustré à la figure 1, l'invention a également pour objet une pièce de viande comprenant une pastille telle que décrite ci-avant dont :
- le centre 3 de la pastille 1 correspond substantiellement au centre 4 de la pièce de viande 2,
- le rapport entre l'épaisseur 5 de la pastille 1 et l'épaisseur 6 de la pièce de viande 2 est compris entre 30 et 36%,
- le rapport entre le diamètre 7 de la pastille 1 et le diamètre 8 de la pièce de viande 2 est compris entre 58 et 65%.

Cette configuration permet d'avoir une cuisson de la pastille qui suit la même évolution que la cuisson de la pièce de viande.

De manière avantageuse, la pièce de viande et la pastille sont configurées de sorte que le rapport entre le volume 7 de la pastille 1 et le volume 8 de la pièce de viande 2 est compris entre 13 et 18%.

Cette configuration permet d'avoir une diffusion de la pastille dans toute la pièce de viande.

Dans un mode de réalisation particulier, la pièce de viande est un cylindre ayant un diamètre de 8cm et une épaisseur de 3cm. La pastille disposée dans une telle pièce de viande présente avantageusement un diamètre de 5cm et une épaisseur de 1cm.

Un tel mode de réalisation de la pièce de viande garantit une répartition uniforme de la sauce dans la pièce de viande quelle que soit la cuisson souhaitée (saignante, à point ou bien cuite) et ceci substantiellement sans débordement de la sauce hors de la pièce de viande malgré les retournements de la pièce de viande durant la cuisson, lesdits retournements étant préférentiellement réalisés à l'aide d'une spatule.

Selon un mode de réalisation préféré, la pièce de viande présente un grammage compris entre 80g et 180 g. Un grammage de 80g est particulièrement adapté pour les jeunes consommateurs, tandis qu'un grammage de 180 g est idéal pour les consommateurs adultes les plus gourmands. Plus préférentiellement, le grammage de la pièce de viande est compris entre 125 et 170 g afin de s'adapter au plus grand nombre. Avantageusement, le grammage de la pièce de viande est égal à 150g et peut se décomposer en 125g de viande et 25g de sauce.

Dans un mode de réalisation avantageux, la pièce de viande se présente sous forme d'un cylindre dont la hauteur est inférieure au diamètre, il s'agit donc avantageusement d'une forme ronde et aplatie de type palet. Dans un mode de réalisation préférentiel, la forme de la pastille de sauce est identique à la forme de la pièce de viande. A titre d'exemple, la pastille de sauce peut être ronde, oblongue ou gibbeuse.

Dans une configuration particulièrement avantageuse, la pastille de sauce est une homothétie de la pièce de viande.

Comme la pastille de sauce est avantageusement située au centre de la pièce de viande, l'énergie fournie pour cuire la viande sert en partie à réchauffer la pastille de sauce. Une fois que la température de fusion est atteinte, la sauce commence à diffuser. De très bons résultats ont été obtenus avec de la viande de boeuf hachée.

De manière à réaliser une pièce de viande telle que définie précédemment, il est particulièrement avantageux d'utiliser un dispositif de structuration de viande hachée qui est associé à un tour de conditionnement 14 qui peut avoir la forme d'un cercle de conditionnement.

Le cercle de conditionnement 14 définit la forme et les dimensions finales de la pièce de viande. A titre d'exemple, le cercle de conditionnement 14 est un cylindre creux qui définit un volume à remplir. Dans un mode de réalisation particulier, le diamètre est compris entre 6 et 10cm et la hauteur est comprise entre 2,4 et 4cm. Dans un mode de réalisation particulièrement avantageux, le cercle de conditionnement a un diamètre égal à 8cm et une hauteur égale à 3 cm.

Un premier volume de viande est placé dans le cercle de conditionnement.

Le dispositif de structuration présente une forme tubulaire avec deux extrémités opposées selon l'axe XX. La première extrémité comporte un premier motif 9 qui présente les dimensions latérales de la pastille de sauce ou sensiblement les dimensions latérales de la pastille de sauce. Le premier motif 9 est surmonté par un deuxième motif 10. Avantageusement, un troisième motif 11 est disposé entre le premier motif 9 et le deuxième motif 10.

Les dimensions latérales du premier motif 9 sont avantageusement des rayons compris entre 2 et 3 cm, préférentiellement sous la forme d'un disque ayant un diamètre compris entre 4 et 6 cm. L'épaisseur du premier motif est préférentiellement supérieure à l'épaisseur de la pastille et avantageusement comprise entre 0,8 et 1,4 cm. Dans un mode de réalisation préférentiel, le diamètre du premier motif 9 est égal à 5,4 cm pour former un trou de logement d'une pastille ayant un diamètre égal à 5 cm.

Le premier motif 9 est configuré pour s'enfoncer dans le trou traversant défini par le cercle de conditionnement. Le deuxième motif 10, est configuré pour déborder au delà du cercle de conditionnement qui agit alors comme un arrêt à l'enfoncement du dispositif de structuration dans le cercle de conditionnement. Le deuxième motif 10 présente un diamètre supérieur au diamètre du tour de conditionnement pour bloquer l'enfoncement du dispositif dans le tour de conditionnement. Ainsi, le fond du trou de logement de la pastille est défini par rapport au support tenant la viande hachée et le tour de conditionnement.

De manière avantageuse, le troisième motif 11 connecte le premier motif 9 avec le deuxième motif 10 et il présente une paroi latérale monotone pour faciliter le transfert de viande lors de l'enfoncement du premier motif dans le cercle de conditionnement.

Dans un mode de réalisation préférentiel, le troisième motif à la forme d'un tronc de cône dont une des faces présente les mêmes dimensions que celles du premier motif 9. La face opposée du tronc de cône a préférentiellement les dimensions latérales du cercle de conditionnement. De cette manière, le premier motif 9 est centré automatiquement dans le cercle de conditionnement. Le troisième motif 11 a une première face munie d'un diamètre égal au diamètre du premier motif, une deuxième face munie d'un diamètre compris entre 7 et 9 cm et d'une épaisseur comprise entre 0,8 et 1,2 cm.

A titre d'exemple, la première face du tronc de cône a un diamètre égal à 5,4 cm et la deuxième face à un diamètre égal à 7,8 cm pour se centrer dans un cercle de conditionnement ayant un diamètre égal à 8 cm. Dans un mode de réalisation particulier, le tronc de cône a une hauteur égale à 1 cm.

Le premier motif 9 comporte une face principale et une paroi latérale qui vont s'enfoncer dans la viande hachée pour définir un trou borgne qui pourra abriter la pastille de sauce. Lors de l'enfoncement, la viande est compressée dans le fond et sur les bords définis par le cercle de conditionnement 14. Une partie de la viande est transférée vers les parois latérales de la pièce de viande et vers le haut contre le deuxième motif.

Lors de l'enfoncement, la viande est structurée pour définir une zone de logement de la pastille de sauce et pour compresser la viande hachée afin que cette dernière définisse une paroi suffisamment imperméable à la sauce chauffée au moyen de la cuisson.

Le deuxième motif 10 est avantageusement surmonté par la zone de préhension 13 par l'opérateur ou par une zone de fixation à un outil automatique.

La distance entre la face principale du premier motif 9 et la face principale du deuxième motif 10 qui est en contact avec le cercle de conditionnement est avantageusement supérieure à la moitié de la hauteur de la pièce de viande. A titre d'exemple, la distance entre les faces principales du premier motif et du deuxième motif est égale à 2,2 cm.

De cette manière, la pastille est majoritairement placée dans la moitié inférieure de la pièce de viande. De manière préférentielle, le bas de la pastille est placé entre 25% et 31% de la hauteur de la pièce de viande. Cette configuration permet de positionner la pastille au centre de la pièce de viande une fois la compression finale réalisée. En effet, il a été découvert que l'ajout de viande pour former le reste de la pièce de viande et la compression de cet apport de viande induit un transfert de matière sous la pastille. Ainsi, la pastille est remontée et se place au centre de la pièce de viande.

Comme indiqué plus haut, une fois la pastille posée, le reste de viande est ajouté dans le cercle de conditionnement. Une compression est réalisée pour finaliser la pièce de viande.

De manière avantageuse, le dispositif de structuration comporte un quatrième motif 12 qui correspond aux dimensions latérales du trou traversant défini dans le cercle de conditionnement. Ce quatrième motif permet de compresser la pièce de viande. Les dimensions latérales du quatrième motif sont sensiblement égales à celles de la pièce de viande pour s'enfoncer dans le cercle de conditionnement et pour éviter une fuite de la viande par les parois latérales du cercle de conditionnement. A titre d'exemple, les dimensions latérales du quatrième motif sont égales à un diamètre de 7,8 cm.

De manière avantageuse, le troisième motif 11 a les dimensions transversales de la pièce de viande hachée finale. Préférentiellement, le dessin du premier motif 9 est disposé au centre du dessin du troisième motif 11 de manière à ce que la pastille de sauce soit disposée au centre de la pièce de viande hachée.

De manière avantageuse, le quatrième motif 12 et le troisième motif 11 présentent les mêmes dimensions transversales de sorte qu'une fois la viande hachée structurée par la première extrémité, il est possible d'appliquer la deuxième extrémité sur la pièce de viande en alignant le dessin imprimé dans la viande hachée et le dessin du quatrième motif 12. De cette manière, la pastille de sauce est placée au centre du dessin de la pièce de viande hachée.

Dans un mode de réalisation préférentielle, l'orifice formé dans le quatrième motif a une profondeur égale à la hauteur de la pièce de viande de sorte qu'après application de la deuxième extrémité, la pièce de viande est complètement définie dans ses dimensions latérales, dans sa hauteur et dans la position de la pastille de sauce à l'intérieur de la pièce de viande.

On obtient ainsi une pièce de viande comprenant en son coeur une pastille de sauce parfaitement centrée tant par rapport à l'épaisseur de la pièce de viande que par rapport à son diamètre.

La pièce de viande ainsi obtenue est de réalisation aisée par les opérateurs qui produisent des steaks hachés « à la demande ». Ladite pièce de viande est par ailleurs tout à fait adaptée pour être commercialisée directement auprès de consommateurs recherchant des produits présentant tout à la fois les avantages d'être faciles et rapides à cuisiner sans pour autant nécessiter la moindre concession sur la qualité et le goût.

Le dispositif de structuration et le cercle de conditionnement sont réalisés dans des matériaux aptes au travail de la viande.

On obtient ainsi une pièce de viande comprenant en son coeur une pastille de sauce parfaitement centrée tant par rapport à l'épaisseur de la pièce de viande que par rapport à son diamètre.

## Revendications

1. Pastille de sauce comprenant 4 à 10% en poids de protéines dont 2 à 5% en poids de gélatine, 1 à 3% en poids de fibres, moins de 10% en poids de lipides et présentant un point de fusion compris entre 23 et 35°C, préférentiellement entre 27 et 35°C.

2. Pastille selon la revendication 1, comprenant en outre 70 à 85% en poids d'eau.

3. Pastille selon la revendication 1 ou 2, **caractérisée en ce qu'**elle présente une forme cylindrique dont le rapport diamètre / hauteur est compris entre 4 et 6, préférentiellement compris entre 4,8 et 5,2.

4. Pièce de viande comprenant une pastille selon l'une quelconque des revendications précédentes, **caractérisée en ce que** :
- le centre (3) de la pastille (1) correspond substantiellement au centre (4) de la pièce de viande (2),
- le rapport entre l'épaisseur (5) de la pastille (1) et l'épaisseur (6) de la pièce de viande (2) est compris entre 30 et 36%,
- le rapport entre le diamètre (7) de la pastille (1) et le diamètre (8) de la pièce de viande (2) est compris entre 58 et 65%.

5. Pièce de viande comprenant une pastille selon l'une quelconque des revendications précédentes, **caractérisée en ce que** :
- le centre (3) de la pastille (1) correspond substantiellement au centre (4) de la pièce de viande (2),
- le rapport entre le volume (7) de la pastille (1) et le volume (8) de la pièce de viande (2) est compris entre 13 et 18%.

6. Dispositif pour fabriquer une pièce de viande selon la revendication 4, en coopération avec un tour de conditionnement, dispositif **caractérisé en ce qu'**il comprend successivement :
- un premier motif (9) d'un diamètre compris entre 4 et 6 cm et d'une épaisseur comprise entre 0,8 et 1,4 cm,
- un troisième motif (11) ayant une première face munie d'un diamètre égal au diamètre du premier motif, une deuxième face munie d'un diamètre compris entre 7 et 9 cm et d'une épaisseur comprise entre 0,8 et 1,2 cm,
- un deuxième motif (10) présentant un diamètre supérieur au diamètre du tour de conditionnement pour bloquer l'enfoncement du dispositif dans le tour de conditionnement.

## Patentansprüche

1. Soßenpastille, die 4 bis 10 Gew.-% Proteine enthält, wovon 2 bis 5 Gew.-% Gelatine, 1 bis 3 Gew.-% Fasern, unter 10 Gew.-% Lipide sind, und die einen Schmelzpunkt von 23 bis 35°C, vorzugsweise 27 bis 35°C hat.

2. Pastille nach Anspruch 1, die ferner 70 bis 85 Gew.-% Wasser umfasst.

3. Pateille nach Anspruch 1 oder 2, **dadurch gekennzeichnet, dass** sie eine zylindrische Form hat, bei der das Verhältnis von Durchmesser zu Höhe 4 bis 6, vorzugsweise 4,8 bis 5,2 ist.

4. Fleischstück, das eine Pastille nach einem der vorstehenden Ansprüche enthält, **dadurch gekennzeichnet, dass**
- die Mitte (3) der Pastille (1) im Wesentlichen der Mitte (4) des Fleischstücks (2) entspricht,
- das Verhältnis von der Dicke (5) der Pastille (1) zur Dicke (6) des Fleischstücks (2) 30 bis 36% beträgt,
- das Verhältnis vom Durchmesser (7) der Pastille (1) zum Durchmesser (8) des Fleischstücks (2) 58 bis 65% beträgt.

5. Fleischstück, das eine Pastille nach einem der vorstehenden Ansprüche enthält, **dadurch gekennzeichnet, dass**
- die Mitte (3) der Pastille (1) im Wesentlichen der Mitte (4) des Fleischstücks (2) entspricht,
- das Verhältnis vom Volumen (7) der Pastille (1) zum Volumen (8) des Fleischstücks (2) 13 bis 18% beträgt.

6. Vorrichtung zur Herstellung eines Fleischstücks nach Anspruch 4, in Verbindung mit einem Verarbeitungsturm, Vorrichtung, die **dadurch gekennzeichnet ist, dass** sie aufeinanderfolgend umfasst:
- ein erstes Motiv (9) mit einem Durchmesser von 4 bis 6 cm und einer Dicke von 0,8 bis 1,4 cm,
- ein drittes Motiv (11) mit einer ersten Seite, die mit einem Durchmesser versehen ist, der gleich dem Durchmesser des ersten Motivs ist, einer zweiten Seite, die mit einem Durchmesser von 7 bis 9 cm versehen ist und eine Dicke von 0,8 bis 1,2 cm hat,
- ein zweites Motiv (10), das einen Durchmesser hat, der größer ist als der Durchmesser des Verarbeitungsturms, um das Eindrücken der Vorrichtung in den Verarbeitungsturm zu verhindern.

## Claims

1. Sauce pellet comprising 4 to 10% weight of proteins of which 2 to 5% weight of gelatine, 1 to 3% weight of fibres, less than 10% weight of lipids and presenting a melting point comprised between 23 and 35°C, preferentially between 27 and 35°C.

2. Pellet according to claim 1, further comprising 70 to 85% weight of water.

3. Pellet according to claim 1 or 2, **characterized in that** it presents a cylindrical shape the diameter / height ratio of which is comprised between 4 and 6, preferentially comprised between 4.8 and 5.2.

4. Piece of meat comprising a pellet according to any one of the foregoing claims, **characterized in that**:
- the centre (3) of the pellet (1) corresponds substantially to the centre (4) of the piece of meat (2),
- the ratio between the thickness (5) of the pellet (1) and the thickness (6) of the piece of meat (2) is comprised between 30 and 36%,
- the ratio between the diameter (7) of the pellet (1) and the diameter (8) of the piece of meat (2) is comprised between 58 and 65%.

5. Piece of meat comprising a pellet according to any one of the foregoing claims, **characterized in that**:
- the centre (3) of the pellet (1) corresponds substantially to the centre (4) of the piece of meat (2),
- the ratio between the volume (7) of the pellet (1) and the volume (8) of the piece of meat (2) is comprised between 13 and 18%.

6. Device for producing a piece of meat according to claim 4, in cooperation with a packaging tower, device **characterized in that** it successively comprises:
- a first pattern (9) with a diameter comprised between 4 and 6 cm and with a thickness comprised between 0.8 and 1.4 cm,
- a third pattern (11) having a first surface provided with a diameter equal to the diameter of the first pattern, a second surface provided with a diameter comprised between 7 and 9 cm and with a thickness comprised between 0.8 and 1.2 cm,
- a second pattern (10) presenting a larger diameter than the diameter of the packaging tower to prevent the device from sinking into the packaging tower.
